# EUROPÄISCHE PATENTSCHRIFT

(11) **EP 0 288 911 B1**
(45) Veröffentlichungstag und Bekanntmachung des Hinweises auf die Patenterteilung: **23.09.1992**
(21) Anmeldenummer: 88106406.7
(22) Anmeldetag: 21.04.1988
(51) Int. Cl.: B23K 9/08

(54) **Verfahren und Vorrichtung zum Schweissen metallischer Hohlkörper**
Method and device for welding metallic hollow bodies
Procédé et dispositif pour souder des corps métalliques creux

(30) Priorität: 22.04.1987 DE 3713418
(43) Veröffentlichungstag der Anmeldung: 02.11.1988
(73) Patentinhaber: KUKA Schweissanlagen & Roboter GmbH, D-86165 Augsburg (DE)
(72) Erfinder: Mazac, Karel, Ing., D-8904 Friedberg (DE)
(74) Vertreter: Ernicke, Hans-Dieter, Dipl.-Ing.

(56) Entgegenhaltungen:
- EP-A- 0 003 830
- DE-A- 3 215 806
- DE-A- 3 220 819
- DE-B- 2 015 570
- US-A- 3 882 299

## Beschreibung

Die Erfindung betrifft ein Verfahren und eine Vorrichtung zum Schweißen metallischer Hohlkörper mit einem entlang der Nahtbahn magnetisch bewegten Lichtbogen unter Verwendung einer innerhalb und längs der Hohlkörper ausgerichteten Innenspulenanordnung mit einer radial ausgerichteten Polscheibe, die dem Hohlkörperquerschnitt angepaßt ist und die bis nahe an die Nahtbahn reicht.

Eine derartige Vorrichtung ist aus der EP-PS 003 590 bekannt. Diese Vorrichtung hat den Nachteil, daß sie nicht für alle Querschnittsformen der Hohlkörper geeignet ist und vor allem nur bei horizontal verlaufender Nahtbahn optimale Schweißergebnisse zeigt.

Aus der EP 003 830 ist es bekannt, den Abstand zwischen den beiden zu verschweißenden Werkstücken während des Schweißprozesses zu verändern. Hierdurch werden die Lichtbogenlänge und Schweißstrom, sowie Schweißspannung variiert und den Schweißerfordernissen angepaßt. Die Veränderungen erfassen die gesamte Nahtbahn. Der Lichtbogen läuft entlang der Nahtbahn mit gleichbleibender Geschwindigkeit um. Die DE-A 32 15 806, die DE-A 32 20 819 und die US-C 3 882 299 befassen sich mit Stromprogrammen zur Regelung des Prozesses beim Schweißen mit einem magnetisch bewegten Lichtbogen. Die Stromänderungen betreffen auch hier die gesamte Nahtbahn gleichmäßig.

Es ist daher Aufgabe der vorliegenden Erfindung, ein Verfahren und eine Vorrichtung zum Schweißen metallischer Hohlkörper mit einer Innenspulenanordnung aufzuzeigen, die eine optimale Schweißqualität für alle Querschnitte, Größen und Bearbeitungslagen der Hohlkörper gewährleistet.

Die Erfindung löst diese Aufgabe mit den Merkmalen im Verfahrens- und Vorrichtungshauptanspruch.
Durch die örtliche Veränderung der Induktion im Spalt zwischen Polscheibe und Nahtbahn wird die Bewegung des Lichtbogens beeinflußt. Bei prismatischen Hohlkörperquerschnitten besteht beispielsweise das Problem, daß in den Eckbereichen das Material zu stark abgeschmolzen wird. Mit der Erfindung ist es möglich, an diesen Stellen durch Induktionserhöhung den Lichtbogen momentan zu beschleunigen, wodurch ein Abschmelzen Ecken verhindert wird.

Desgleichen kann durch eine veränderliche Induktion die Verteilung des Schweißbades beeinflußt werden. Dies ist vor allem wichtig, wenn aus Platzgründen langgestreckte Hohlkörper in horizontaler Lage geschweißt werden, wodurch die Nahtbahn vertikal oder schräg verläuft. Durch die Schwerkraft läuft das Schweißbad nach unten. Mit einer Steigerung der Induktion im unteren Nahtbahnbereich kann in vielen Fällen diesem physikalischen Effekt entgegengewirkt werden und es ergibt sich eine gleichmäßige Verteilung des Schweißbades entlang der Nahtbahn.

Zusätzlich kann auch in dem Bereich, wo der Lichtbogen aufwärts bewegt wird, eine Induktionssteigerung erfolgen. Ort und Wert der erforderlichen Induktionsänderungen hängen von den verschiedenen Schweißaufgaben und dabei insbesondere von Formgebung und Materialeigenschaften der zu verschweißenden Hohlkörper ab. Sie können daher in weiten Grenzen variiert werden. Die beanspruchten Induktionsbeeinflussungen stellen insoweit Beispiele für besondere Aufgaben dar.

Die längs der Hohlkörper angeordnete Innenspule mit ihrer quer dazu ausgerichteten Polscheibe erlaubt in Verbindung mit dem erfindungsgemäßen Verfahren und der zugehörigen Vorrichtung die Verschweißung selbst schwierigster Querschnitte, die die normalen Außenspulen vor unlösbare Probleme stellen.

Die Veränderung der Induktion kann nicht nur örtlich, sondern auch zeitlich variieren. Für geringe Wanddicken der zu verschweißenden Hohlkörper empfiehlt es sich, die Induktion nur örtlich zu verändern und während des Schweißens so zu belassen, also zeitlich konstant zu halten. Für größere und vor allem ungleichmäßige Wanddicken, die aber eine gleichmäßige Durchwärmung benötigen, kann die Induktionsänderung nicht nur örtlich, sondern auch zeitlich vorgenommen werden. Durch eine verringerte Induktion kann die Verweilzeit des Lichtbogens an den dickeren Wandbereichen verlängert werden.

Die Veränderung der Induktion ist nach den Vorrichtungsansprüchen auf unterschiedliche Weise möglich, wobei die verschiedenen Beeinflussungsmöglichkeiten auch miteinander kombiniert werden können.
Die Induktion kann nach Ort und Stärke durch die Veränderung der Abstände der Polscheibenränder von der Nahtbahn variiert werden. Das Gleiche ist erreichbar durch Erzeugung unterschiedlich starker Magnetfelder beziehungsweise Induktionen an verschieden Stellen der Polscheibe. Im zweiten Fall ist eine Induktionsänderung durch Eingriffe an der Polscheibe und/oder der damit verbundenen Innenspulenanordnung möglich. In beiden Fällen läßt sich die Induktionsstärke auch mehrfach abstufen.

Eine Beeinflussungsmöglichkeit bieten partielle Veränderungen der Permeabilität, mit denen gezielt unterschiedliche Wirkungen erreichbar sind. So können damit Bereiche in der Polscheibe abgegrenzt werden, die mit unterschiedlich hohen Induktionen beaufschlagt werden. Desgleichen kann durch Veränderung der Permeabilität auch die Stärke der erzeugten Induktion beeinflußt werden. Änderungen der Permeabilität führen auch zu einer Verfeinerung der anderweitig erzeugten Induktionsabstufung.

Eine Induktionsbeeinflussung ist auch durch eine mehrteilige Innenspulenanordnung möglich, wobei Induktion und Einflußbereich der verschiedenen Magnetspulen variiert werden können. Verschieden große Kernquerschnitte erlauben eine Abgrenzung der Einflußbereiche. Die Stärke der Induktion der einzelnen Magnetspulen kann auf unterschiedliche Weise, durch magnetische Widerstände, unterschiedliche Amperwindungszahlen, getrennte Wicklungen und dgl. varriert werden. Magnetische Widerstände und unterschiedliche Amperwindungszahlen stellen die einfachsten und kostengünstigsten Eingriffsmöglichkeiten dar, da nur eine Stromquelle benötigt wird. Bei getrennten Wicklungen sind je nach Zahl der Magnetspulen zwei oder mehr selbständige Stromquellen nötig. Diese bieten andererseits aber auch den Vorteil, daß während des Schweißens die Erregung und damit die Induktion sowohl örtlich als auch zeitlich variiert werden kann. Getrennte Wicklungen vereinfachen auch die Einstellarbeiten zur Erzielung optimaler Ergebnisse.

Es empfiehlt sich weiter, auch außenseitig um die Nahtbahn ein magnetisch und/oder elektrisch leitendes Formteil anzuordnen. Ein elektrisch leitendes Formteil ermöglicht eine Lichtbogenstabilisierung, d.h. der Lichtbogen läuft im Ringspalt sowohl schneller, als auch ruhiger um. Ein Austreten des Lichtbogens aus dem Spalt sowie ein Flattern werden vermieden. Dies bringt außerdem den zusätzlichen Vorteil einer gleichmäßigeren Erwärmung der Werkstücke an den Schweißstellen.
Ist das Formteil außerdem magnetisch leitend, führt dies zu einer Konzentration des Magnetfeldes im Spalt, was wiederum den Lichtbogenlauf und die gleichmäßige Erwärmung der Werkstücke günstig beeinflußt. Für magnetisierbare Werkstücke ergibt sich mit der längsgerichteten Innenspulenanordnung ohnehin der Vorteil einer starken Feldausbildung durch kurze Flußlinien von der Polscheibe über den Spalt in das Werkstück und zurück in das Joch der Innenspulenanordnung. Dieser Effekt wird durch die Feldkonzentration mittels des Formteiles noch weiter verstärkt und günstig beeinflußt.

Weitere vorteilhafte Ausgestaltungen der Erfindung sind in den Unteransprüchen angegeben.

Die Erfindung ist in den Zeichnungen beispielsweise und schematisch dargestellt. Im einzelnen zeigen
- Fig. (1): einen Längsschnitt durch eine Schweißvorrichtung nach dem Stand der Technik,
- Fig. (2) und (3): Stirnansichten der erfindungsgemäßen Polscheibe mit der umgebenden Nahtbahn unter Variation der Abstände und
- Fig. (4) bis (11): Variationen der Innenspulenanordnung in verschiedenen Ansichten.

Fig. (1) zeigt eine Schweißvorrichtung (1) mit einer Innenspulenanordnung (4) nach dem Stand der Technik, insbesondere der EP-PS 003 590. Die Schweißvorrichtung (1) dient zur Verbindung zweier Hohlkörper (2,3), hier in Form eines Kragenflansches (2) und eines Rohres (3). Die Hohlkörper (2,3) sind in einer Spannvorrichtung (9) gehalten und axial fluchtend zueinander ausgerichtet, so daß zwischen ihnen die Nahtbahn in Form eines umlaufenden Ringspaltes (10) entsteht, in der der Lichtbogen rundum getrieben wird. Der Lichtbogen wird hierbei durch ein Magnetfeld angetrieben, daß von einer Innenspulenanordnung (4) erzeugt wird, die sich in Längsrichtung innerhalb des einen Hohlkörpers (2) beziehungsweise der diesen haltenden Spannvorrichtung (9) erstreckt. Die Innenspulenanordnung (4) ist stirnseitig mit einer quer zur Hohlkörperlängsachse und in der Ebene der Nahtbahn (10) ausgerichteten Polscheibe (8) magnetisch leitend verbunden. Die Polscheibe (8) ist in ihrer Kontur dem Innenquerschnitt der Hohlkörper (2,3) angepaßt und reicht unter Freilassung eines Luftspaltes (12) bis knapp an die Nahtbahn (10). Beim Stand der Technik ist der Luftspalt (12) überall gleichgroß. In Verbindung mit der einfachen Innenspulenanordnung (4) läßt sich damit nur ein gleichmäßiges Magnetfeld beziehungsweise eine konstante Induktion erzielen, so daß der Lichtbogen mit gleichmäßiger Geschwindigkeit umläuft.

Die erfindungsgemäße Schweißvorrichtung unterscheidet sich von diesem Stand der Technik hinsichtlich des Verfahrens zur Erzeugung örtlich und zeitlich unterschiedlicher Induktionen und der Gestaltung der Polscheibe (8) sowie der Innenspulenanordnung (4). Die Innenspulenanordnung (4) ist dazu vorzugsweise ortsfest angeordnet, kann aber zum Austausch von Teilen, zum Umrüsten oder dgl. demontiert werden. Ansonsten arbeitet sie grundsätzlich nach dem gleichen Schweißverfahren mit der Plastifizierung der Nahtbahnränder und anschließender Stauchung. Die erfindungsgemäße Schweißvorrichtung (1) ist damit auch bezüglich der Spannvorrichtung (9) und der sonstigen Maschinenteile ähnlich wie der Stand der Technik gestaltet.

Fig. (2) und (3) zeigen in Stirnansicht unterschiedlich gestaltete Polscheiben (8) in ihrer Zuordnung zur Nahtbahn (10) bzw. zur Kontur der Hohlkörper (2,3). In Fig. (2) weisen die Hohlkörper (2,3) einen prismatischen Querschnitt auf. Bei gleichmäßig angetriebenem Lichtbogen würde hier in den Eckbereichen ein übermäßiger Materialabtrag stattfinden. Um dem entgegenzuwirken, wird der Lichtbogen durch die spezielle Gestaltung der Polscheibe (8) in den Eckbereichen punktuell beschleunigt und auf den geraden Bahnteilen weniger stark angetrieben. Dies geschieht durch örtliche Veränderung der Induktion, indem die Größe des Luftspaltes (12) zwischen Polscheibe (8) und Nahtbahn (10) verändert wird. Die Polscheibe (8) weist hierzu ebenfalls eine prismatische Kontur auf, wobei sie mit den Ecken unter punktweiser Verringerung des Abstandes (12) bis knapp an die Nahtbahn (10) reicht. Zwischen den Ecken ist der Außenrand der Polscheibe (8) unter Bildung von wannenförmigen Ausnehmungen (11) zurückversetzt. Durch die unterschiedlich großen Luftspalte (12) wird die Induktion in den Ecken stellenweise erhöht und im Bereich der Ausnehmungen (11) zunehmend verringert und mit Annäherung an die nächste Ecke wieder erhöht. Dementsprechend wird der Lichtbogen in den Ecken stark beschleunigt, danach weniger stark angetrieben und ab der Mitte der Ausnehmungen (11) wieder zunehmend beschleunigt. Je nach Material, Wanddicke und dergleichen anderen Eigenschaften der Hohlkörper (2,3) kann die Form und Tiefe der Ausnehmungen, sowie die Gestalt der Polscheibenecken variieren.

Fig. (3) zeigt den Fall, in dem die Hohlkörper (2,3) in horizontaler Lage geschweißt werden. Hierbei verläuft die Nahtbahn (10) senkrecht, und der Lichtbogen läuft in Pfeilrichtung um. Die Nahtbahn (10) ist genauso wie die Polscheibe (8) kreisrund. Die Polscheibe (8) ist allerdings exzentrisch nach unten versetzt, so daß der Luftspalt (12) entlang der Fallnaht entsprechend dem abwärtslaufenden Lichtbogen ständig verkleinert und entlang der Steignaht wieder zunehmend vergrößert wird. Hierdurch wird der Lichtbogen im oberen Bereich weniger stark angetrieben und im unteren Bereich beschleunigt. In der Folge werden unerwünschte Anhäufungen des Schweißbads im unteren Bereich der Nahtbahn (10) vermieden.

In Variation zum gezeigten Ausführungsbeispiel kann die Polscheibe (8) auch eine von der Kreisform abweichende Gestalt haben, um einen weniger gleichmäßigen Induktionsverlauf und damit andere Beschleunigungen des Lichtbogens zu erzielen. Je nach Kontur, Wanddicke, Bearbeitungslage der Hohlkörper können auch die Abstandsregeln der Ausführungsbeispiele von Fig. (2) und (3) kombiniert werden.

Außer durch Veränderung der Luftspalte (12) kann die Induktion auch durch örtlich unterschiedliche Erzeugung von Magnetfeldern entsprechend der Ausführungsbeispiele Fig. (4 - 10) variiert werden. Die Möglichkeiten der Abstands- und Magnetfeldänderung können auch miteinander kombiniert werden.

Fig. (4) zeigt im Längsschnitt eine Innenspulenanordnung (4) in der gleichen Lage innerhalb der Schweißvorrichtung (1) wie diejenige von Fig. (1). Sie besteht aus zwei Magnetspulen (5,6) mit ferromagnetischem Kern, die stirnseitig mit der Polscheibe (8) und am anderen Ende mit einem ferromagnetischen Joch (14) miteinander magnetisch leitend verbunden sind. Die Kerne (5,6) sind unterschiedlich dick und besitzen jeweils eine eigene Wicklung (7). Die Wicklungen (7) sind an zwei getrennte und einzeln einstellbare Stromquellen (nicht dargestellt) angeschlossen. Durch die unterschiedliche Dicke der Kerne werden verschieden große Bereiche der Polscheibe (8) beeinflußt.

Mit einer unterschiedlichen Erregung der Wicklungen (7) wird die gewünschte Induktion im jeweiligen Polscheibenbereich eingestellt. In Fig. (4) ist der Fall einer stärkeren Erregung der Wicklung (7) der Magnetspule (5) dargestellt. Ein Teil des magnetischen Flusses wird durch die Magnetspule (6) wieder zur Spule (5) geleitet bzw. der magnetische Fluß aus der Spule (6) wird stark verringert. Je nach Erregung der Wicklungen (7) kann die Induktion am rechten Rand der Polscheibe (8) bis auf 0 reduziert werden. Die Verhältnisse lassen sich auch umkehren, indem im Bereich der dünnen Magnetspule (6) eine höhere Induktion als in der Spule (5) erzeugt wird.

Fig. (4) zeigt auch den Verlauf der Feldlinien. Die koaxiale Lage der Hohlkörper (2,3) und der Innenspulenanordnung (4) führt zu einem sehr günstigen Verlauf der Feldlinien. Wenn außerdem die Hohlkörper (2,3) aus ferromagnetischem Material bestehen, ergibt sich ein hoher Leitwert des magnetischen Kreises, wodurch auch fein abgestufte örtliche Induktionsänderungen sich deutlich auswirken.

Fig. (5) zeigt die Polscheibe (8) und die beiden Spulen (5,6) entsprechend Fig. (4) in Draufsicht. Die Kerne der beiden Spulen (5,6) sind in ihrer Außenkontur so aufeinander abgestimmt, daß sie gemeinsam der Umfangskontur der Polscheibe (8) mit gleichmäßigem Abstand nachgebildet sind. Für eine kreisrunde Polscheibe (8) ergeben sich in diesem Ausführungsbeispiel halbmondförmige Querschnitte der Spulenkerne (5,6). Im Innenbereich weisen die Kerne (5,6) gerade und parallele Grenzkanten (15) auf, mit denen sie mit Abstand zueinander benachbart sind. Bei Verwendung von drei oder mehr Magnetspulen würden deren Kerne im Querschnitt die Form von spitzwinkeligen Kreissegmenten haben, die wiederum mit geraden Grenzkanten (15) einander benachbart sind. Bei Änderung der Polscheibenkontur variiert die Kernform entsprechend.

Fig. (6) zeigt eine Variation zu Fig. (4), bei der zwei getrennte Magnetspulen (5,6) mit gleichdicken Kernen Verwendung finden. Hier werden Induktionsunterschiede durch unterschiedliche Windungszahl und/oder Erregung der Wicklungen (7) erzielt.

Fig. (7 - 10) zeigen Variationen der Erfindung, bei denen die Induktion durch magnetische Widerstände (13) beeinflußt wird, die eine geringere Permeabilität als die sonstigen ferromagnetischen Teile der Innenspulenanordnung (4) bzw. der Polscheibe (8) besitzen. Die magnetischen Widerstände (13) können aus einem Vollmaterial, beispielsweise Messing oder auch aus Luftspalten bestehen.

Fig. (7) zeigt beispielsweise einen Spulenkern (6) mit einem Messingkopf. Die Induktion der Spule (6) wird damit herabgesetzt.

In Fig. (8) besteht das rückwärtige Joch (14) aus einem Material mit niedriger Permeabilität. Dieser magnetische Widerstand (13) erlaubt eine sehr feine Abstufung und Einstellung der Induktionsunterschiede.

In der Ausführungsform gem. Fig. (9) ist der magnetische Widerstand (13) in der Polscheibe (8) angeordnet. Dies hat den Vorteil, daß die Induktion unmittelbar an der Wirkstelle beeinflußt werden kann. Der magnetische Widerstand (13) kann als gerader Streifen zwischen den beiden Spulen (5,6) die gesamte Polscheibe (8) durchsetzen und diese in zwei unterschiedlich beeinflußbare Bereiche teilen. An den Enden weist der Streifen noch eine ferromagnetische Verbindung zwischen den Polscheibenteilen auf, um magnetische Löcher zu vermeiden. Der magnetische Widerstand kann aber auch anders, beispielsweise als abgewinkelter Streifen gestaltet und angeordnet sein.

Fig. (10) zeigt eine Innenspulenanordnung (4) mit einer einzigen Magnetspule (5), bei der aber die Induktion durch in den Kern eingesetzte magnetische Widerstände (13) örtlich verändert wird. Die magnetischen Widerstände (13) befinden sich im Anlagebereich an der Polscheibe (8). Durch unterschiedliche Länge kann deren Wirkung noch weiter örtlich abgestuft werden. Dieses Ausführungsbeispiel zeigt die konstruktiv einfachste Form, die es gestattet, nur mit einer Magnetspule und einer Stromquelle örtlich unterschiedliche Induktionen zu erzeugen.

Weitere Variationen sind dahingehend möglich, daß im Ausführungsbeispiel der Figuren (4,7 und 8) die beiden Wicklungen (7) an eine gemeinsame Stromquelle angeschlossen sind und die Induktion über eine unterschiedliche Amperwindungszahl variiert wird. Ferner kann auch die mit einem oder mehreren magnetischen Widerständen (13) versehene Polscheibe (8) (vgl.Fig (9)) mit den verschiedenen Ausführungsformen der Innenspulenanordnung (4) kombiniert werden. Um einfache und schnelle Umrüstungen zu ermöglichen, kann die Polscheibe (8) grundsätzlich auch lösbar mit der Innenspulenanordnung (4) verbunden sein. Eine Anpassung an unterschiedliche Schweißbedingungen erfolgt dann durch Austausch der Polscheibe. Desgleichen ist es auch möglich, die gesamte Innenspulenanordnung (4) gegenüber der Spannvorrichtung (9) verstellbar, insbesondere drehbar zu lagern. Gleichermaßen kann auch eine entsprechende Lagerung der Polscheibe an der Innenspulenanordnung vorgesehen sein.

Fig. (11) zeigt eine Innenspulenanordnung (4) gemäß den verschiedenen vorausgegangenen Ausführungsbeispielen, bei der außenseitig und auf Schweißspalthöhe um die Nahtbahn (10) ein Formteil (16) angeordnet ist. Dieses besteht aus einem zumindest elektrisch leitenden Material, was zusätzlich aber auch magnetisierbar beziehungsweise magnetisch leitend sein kann. Das Formteil (16) ist stationär angeordnet und umschließt die Nahtbahn (10) voll umfänglich, wobei es einen gewissen radialen Abstand zum Ringspalt (10) aufweist.

Wenn das Formteil (16) elektrisch leitfähig ist, dient es der elektrischen Lichtbogenstabilisierung. Der Lichtbogen läuft schneller und ruhiger. Hierbei empfiehlt es sich, einen kleineren Abstand zum Schweißgspalt (10) vorzusehen, da die Beeinflussung über das elektrische Feld des Lichtbogens erfolgt.

Ist das Formteil (16) außerdem magnetisch leitfähig, führt dies zu einer Konzentration des Magnetfeldes im Schweißspalt (10). Hierfür kann der Abstand des Formteiles (16) größer sein. Über die Abstandsänderung kann damit der gewünschte Effekt variiert werden. Das Formteil (16) kann selbst auch ausgeschnitten sein, um von außen eine Induktionsbeeinflussung durch unterschiedliche Blechabstände am Nahtumfang herbeizuführen. Dies läßt sich auch für andere Spulenanordnungen, beispielsweise Außenspule, integrierte Spule etc. einsetzen.

### Stückliste

- 1: Schweißvorrichtung
- 2: Hohlkörper
- 3: Hohlkörper
- 4: Innenspulenanordnung
- 5: Magnetspule, Kern
- 6: Magnetspule, Kern
- 7: Wicklung
- 8: Polscheibe
- 9: Spannvorrichtung
- 10: Nahtbahn, Schweißspalt
- 11: Ausnehmung
- 12: Luftspalt, Abstand
- 13: magnetischer Widerstand
- 14: Joch
- 15: Grenzkante
- 16: Formteil

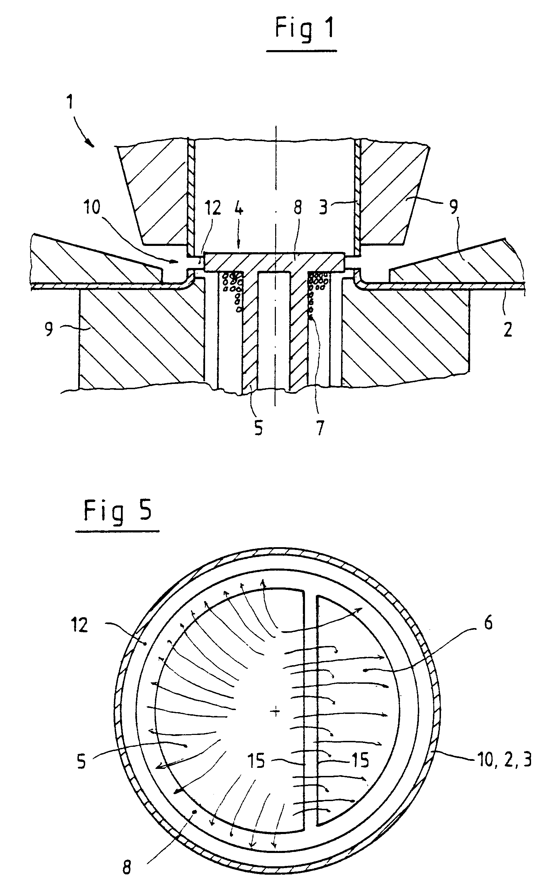

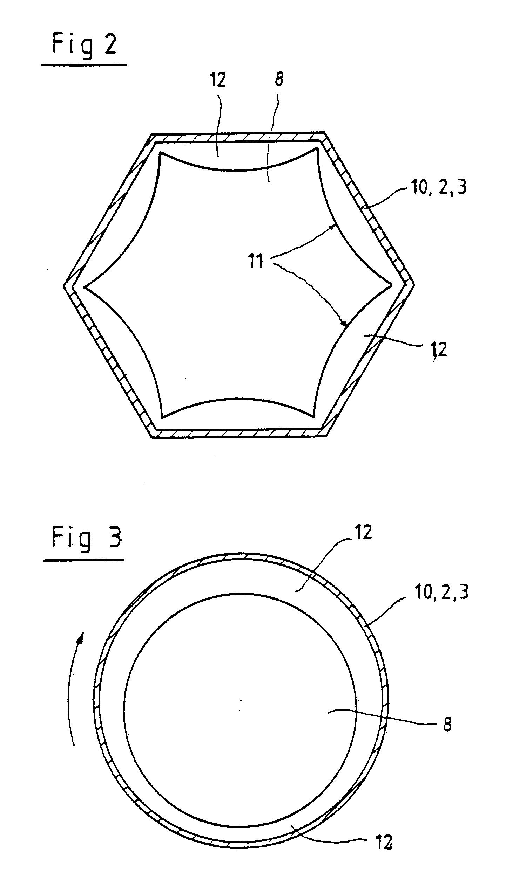

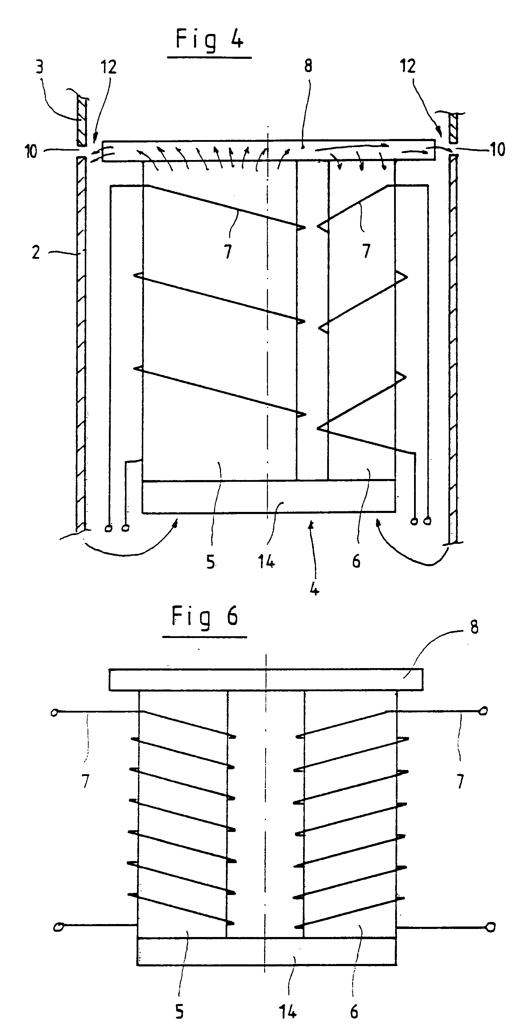

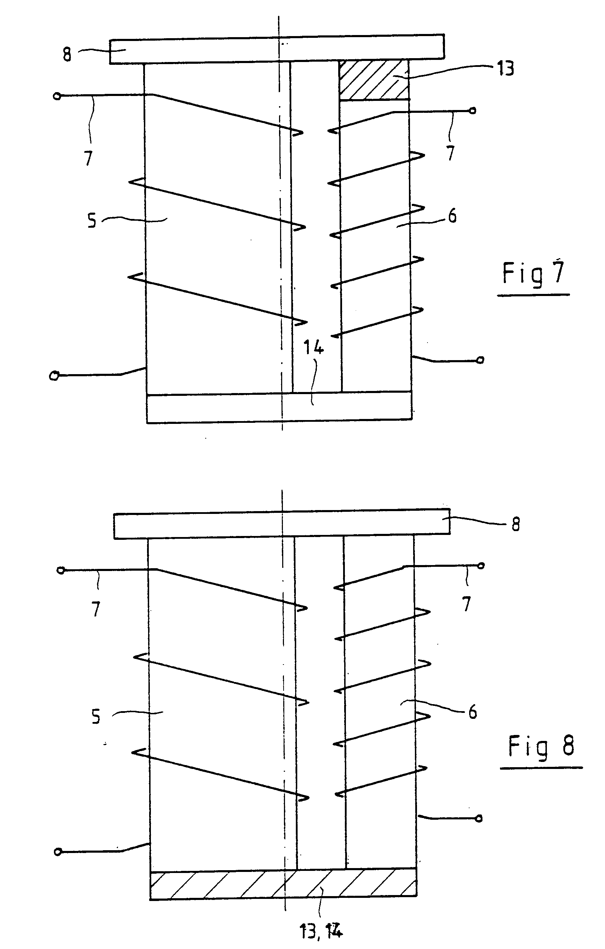

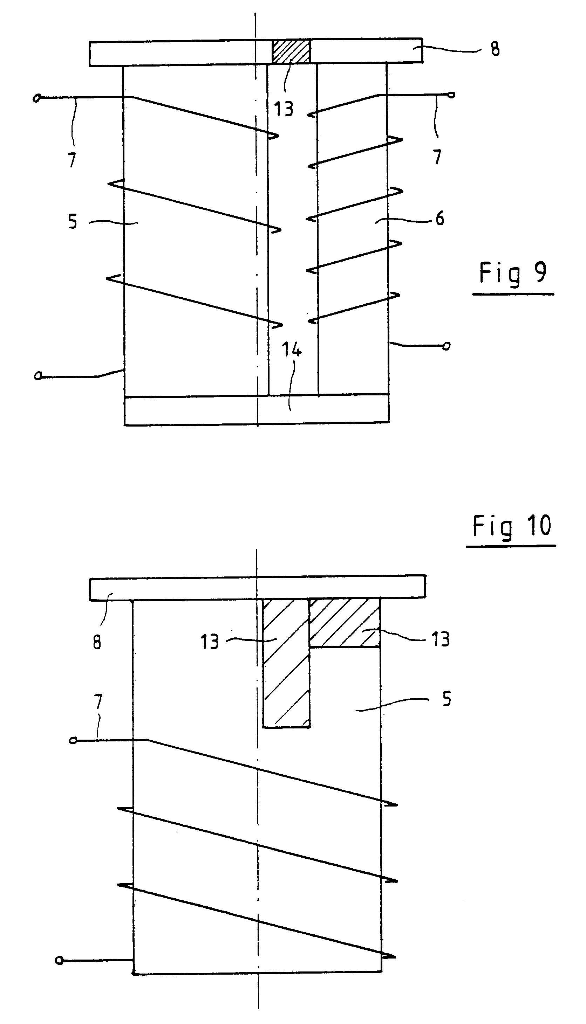

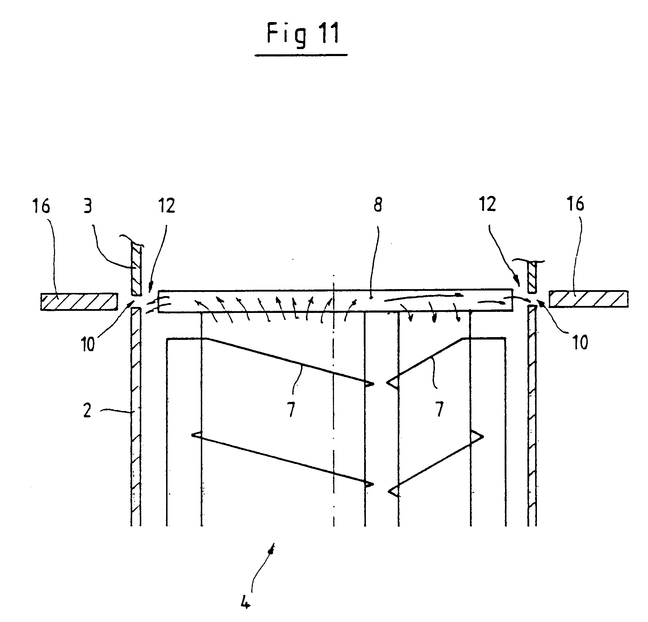

## Patentansprüche

1. Verfahren zum Schweißen metallischer Hohlkörper mit einem entlang der Nahtbahn magnetisch bewegten Lichtbogen unter Verwendung einer innerhalb und längs der Hohlkörper ausgerichteten Innenspulenanordnung mit einer radial ausgerichteten Polscheibe, die dem Hohlkörperquerschnitt angepaßt ist und die bis nahe an die Nahtbahn reicht, dadurch **gekennzeichnet,** daß der Lichtbogen auf der Nahtbahn örtlich unterschiedlich beschleunigt wird, wobei die magnetische Induktion im Spalt zwischen Polscheibe und Nahtbahn über den Umfang der Polscheibe stellenweise verändert wird.

2. Verfahren nach Anspruch 1, dadurch **gekennzeichnet,** daß zum Schweißen entlang einer Nahtbahn, die vertikal oder schräg verläuft, die Induktion im unteren Nahtbahnbereich gesteigert wird.

3. Verfahren nach Anspruch 1, dadurch **gekennzeichnet,** daß zum Schweißen von Hohlkörpern mit prismatischen Querschnitten die Induktion an den Ecken der Nahtbahn punktuell erhöht wird.

4. Vorrichtung zum Schweißen metallischer Hohlkörper mit einem entlang der Nahtbahn magnetisch bewegten Lichtbogen, bestehend aus einer innerhalb und längs der Hohlkörper ausgerichteten Innenspulenanordnung mit einer radial ausgerichteten Polscheibe, die dem Hohlkörperquerschnitt angepaßt ist und die bis nahe an die Nahtbahn reicht, dadurch **gekennzeichnet,** daß die Polscheibe (8) an ihrem Umfang unterschiedliche Abstände (12) von der Nahtbahn (10) aufweist, wobei der Abstand (12) zur örtlichen Induktionserhöhung stellenweise verringert ist.

5. Vorrichtung zum Schweißen metallischer Hohlkörper mit einem entlang der Nahtbahn magnetisch bewegten Lichtbogen, bestehend aus einer innerhalb und längs der Hohlkörper ausgerichteten Innenspulenanordnung mit einer radial ausgerichteten Polscheibe, die dem Hohlkörperquerschnitt angepaßt ist und die bis nahe an die Nahtbahn reicht, dadurch **gekennzeichnet,** daß die Innenspulenanordnung (4) oder die Polscheibe (8) stellenweise unterschiedlich starke Magnetfelder aufweisen.

6. Vorrichtung nach Anspruch 5, dadurch **gekennzeichnet,** daß die Innenspulenanordnung (4) mehrere Magnetspulen (5,6) aufweist, die unterschiedlich starke Magnetfelder erzeugen und endseitig über die Polscheibe (8) und ein Joch (14) miteinander verbunden sind.

7. Vorrichtung nach Anspruch 6, dadurch **gekennzeichnet,** daß die Magnetspulen (5,6) unterschiedlich dicke Kerne aufweisen.

8. Vorrichtung nach Anspruch 6, dadurch **gekennzeichnet,** daß die Wicklungen (7) der Magnetspulen (5,6) an eine gemeinsame Stromquelle angeschlossen sind.

9. Vorrichtung nach Anspruch 6 oder 7, dadurch **gekennzeichnet,** daß die Wicklungen (7) an getrennte, separat einstellbare Stromquellen angeschlossen sind.

10. Vorrichtung nach Anspruch 5 oder 6, dadurch **gekennzeichnet,** daß die Polscheibe (8) und/oder die einzelne Magnetspule (5,6) magnetische Widerstände (13) mit geringerer Permeabilität aufweisen.

11. Vorrichtung nach Anspruch 6 oder einem der folgenden, dadurch **gekennzeichnet,** daß die verschiedenen Magnetspulen (5,6) so gestaltet und zueinander angeordnet sind, daß sie gemeinsam umfangseitig der Kontur der Polscheibe (8) angepaßt sind und innenseitig mit geraden Kanten aneinandergrenzen.

12. Vorrichtung nach Anspruch 4 oder einem der folgenden, dadurch **gekennzeichnet,** daß außen um die Nahtbahn (10) ein magnetisch und/oder elektrisch leitendes Formteil angeordnet ist.

## Claims

1. Method of welding hollow metal bodies, having a light arc moved magnetically along the weld path and using an inner coil arrangement aligned within and along the hollow bodies, with a radially aligned pole disc which matches the cross-section of the hollow body and extends close to the weld path, characterized in that the light arc is accelerated to different extents in localized manner on the weld path, the magnetic induction in the gap between the pole disc and the weld path being altered at points over the periphery of the pole disc.

2. Method according to Claim 1, characterized in that, for welding along a weld path which runs vertically or obliquely, the induction in the lower weld path region is increased.

3. Method according to Claim 1, characterized in that, for welding hollow bodies having prismatic cross-sections, the induction is increased at points at the corners of the weld path.

4. Device for welding hollow metal bodies, having a light arc moved magnetically along the weld path and comprising an inner coil arrangement aligned within and along the hollow bodies, with a radially aligned pole disc which matches the cross-section of the hollow body and extends close to the weld path, characterized in that the pole disc (8) has on its periphery differing spacings (12) from the weld path (10), the spacing (12) being reduced at points with respect to the localized increase in induction.

5. Device for welding hollow metal bodies, having a light arc moved magnetically along the weld path and comprising an inner coil arrangement aligned within and along the hollow bodies, with a radially aligned pole disc which is matched to the cross-section of the hollow body and extends close to the weld path, characterized in that the inner coil arrangement (4) or the pole disc (8) have magnetic fields of which the strength differs at points.

6. Device according to Claim 5, characterized in that the inner coil arrangement (4) has a plurality of magnetic coils (5, 6) which produce magnetic fields of different strength and are connected to one another at the end sides by way of the pole disc (8) and a yoke (14).

7. Device according to Claim 6, characterized in that the magnetic coils (5, 6) have cores of differing thickness.

8. Device according to Claim 6, characterized in that the windings (7) of the magnetic coils (5, 6) are connected to a common current source.

9. Device according to Claim 6 or 7, characterized in that the windings (7) are connected to discrete, separately settable current sources.

10. Device according to Claim 5 or 6, characterized in that the pole disc (8) and/or the individual magnetic coil (5, 6) have magnetic resistors (13) of low permeability.

11. Device according to Claim 6 or one of the following, characterized in that the various magnetic coils (5, 6) are shaped and arranged with respect to one another such that they are together matched on the peripheral side to the contour of the pole disc (8) and on the inside adjoin one another with straight edges.

12. Device according to Claim 4 or one of the following, characterized in that a magnetically and/or electrically conductive moulding is arranged on the outside around the weld path.

## Revendications

1. Procédé pour souder des corps creux métalliques en utilisant un arc électrique déplacé magnétiquement le long de la ligne de soudage, moyennant l'utilisation d'un dispositif à bobines d'induction, aligné à l'intérieur et le long des corps creux et comportant un disque polaire aligné radialement, qui est adapté à la section transversale des corps creux et s'étend jusqu'à proximité de la ligne de soudage, caractérisé par le fait que l'arc électrique est localement accéléré de façon différente en direction de la ligne de soudage, l'induction magnétique dans la fente présente entre le disque polaire et la ligne de soudage étant modifiée par endroits sur le pourtour du disque polaire.

2. Procédé suivant la revendication 1, caractérisé par le fait que pour le soudage le long d'une ligne de soudage verticale ou oblique, on accroît l'induction dans la partie inférieure de la ligne de soudage.

3. Procédé suivant la revendication 1, caractérisé par le fait que pour le soudage de corps creux possédant des sections transversales prismatiques, on accroît ponctuellement l'induction au niveau des angles de la ligne de soudage.

4. Dispositif pour souder des corps creux métalliques en utilisant un arc électrique déplacé magnétiquement le long de la ligne de soudage, moyennant l'utilisation d'un dispositif à bobines d'induction, aligné à l'intérieur et le long des corps creux et comportant un disque polaire aligné radialement, qui est adapté à la section transversale des corps creux et s'étend jusqu'à proximité de la ligne de soudage, caractérisé par le fait que, sur son pourtour, le disque polaire (8) est séparé de la ligne de soudage (10) par des distances différentes (12), la distance (12) étant réduite par endroits pour accroître localement l'induction.

5. Dispositif pour souder des corps creux métalliques en utilisant un arc électrique déplacé magnétiquement le long de la ligne de soudage, moyennant l'utilisation d'un dispositif à bobines d'induction, aligné à l'intérieur et le long du corps creux et comportant un disque polaire aligné radialement, qui est adapté à la section transversale des corps creux et s'étend jusqu'à proximité de la ligne de soudage, caractérisé par le fait que le dispositif à bobines intérieures (4) ou le disque polaire (8) possède des champs magnétiques qui ont des intensités différentes, par endroits.

6. Dispositif suivant la revendication 5, caractérisé par le fait que le dispositif à bobines intérieures (4) comporte plusieurs bobines magnétiques (5,6), qui produisent des champs magnétiques ayant des intensités différentes et sont raccordés entre elles, à leurs extrémités, par l'intermédiaire du disque polaire (8) et d'une culasse (14).

7. Dispositif suivant la revendication 6, caractérisé par le fait que les bobines magnétiques (5,6) possèdent des noyaux ayant des épaisseurs différentes.

8. Dispositif suivant la revendication 6, caractérisé par le fait que les enroulements (7) des bobines magnétiques (5,6) sont raccordés à une source de courant commune.

9. Dispositif suivant la revendication 6 ou 7, caractérisé par le fait que les enroulements (7) sont raccordés à des sources de courant séparées, réglables séparément.

10. Dispositif suivant la revendication 5 ou 6, caractérisé par le fait que le disque polaire (8) et/ou les bobines magnétiques individuelles (5,6) possèdent des résistances magnétiques (13) ayant une perméabilité réduite.

11. Dispositif suivant la revendication 6 ou l'une des suivantes, caractérisé par le fait que les différentes bobines magnétiques (5,6) sont agencées et disposées les unes par rapport aux autres de telle sorte qu'elles sont adaptées en commun, au niveau de leur contour, au contour du disque polaire (8) et, au niveau de leur côté intérieur, sont adjacentes avec des bords rectilignes.

12. Dispositif suivant la revendication 4 ou l'une des suivantes, caractérisé par le fait qu'une pièce de forme conductrice magnétiquement et/ou électriquement est disposée extérieurement autour de la piste de soudage (10).
